# EUROPEAN PATENT APPLICATION

(11) **EP 4 807 390 A1**
(43) Date of publication of application: **16.09.2026**
(21) Application number: 25275014.6
(22) Date of filing: 12.03.2025
(51) Int. Cl.: G01S 7/00, B63G 13/00, G01S 13/931, G01S 13/933, G01S 13/937, H01Q 1/34, H04W 84/18

(54) **DECISION MAKING BASED ON AGGREGATED RADAR DATA**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Arrangements are described comprising: organising a plurality of uncrewed vehicles as a graph of nodes and edges; obtaining local radar data at one or more of said plurality of uncrewed vehicles from one or more sensors at the respective uncrewed vehicle; locally generating, at one or more of said uncrewed vehicles, aggregated radar data for the respective uncrewed vehicle, in accordance with a message aggregation scheme, based on the local radar data obtained at the respective uncrewed vehicle and, at least some of the information communicated between neighbouring uncrewed vehicles; communicating information between neighbouring uncrewed vehicles; and taking action at one or more uncrewed vehicle of the plurality based, at least in part, on the aggregated radar data for the respective uncrewed vehicle.

## Description

### FIELD

The present invention relates to uncrewed vehicles (such as uncrewed aerial vehicles, uncrewed ground vehicles, uncrewed underwater vehicles etc.) and systems including a plurality of uncrewed devices (e.g. a swarm of uncrewed vehicles).

### BACKGROUND

An uncrewed vehicle can obtain radar data and take decisions, for example as part of a battlefield scenario. However, it can be difficult for a group of such uncrewed vehicles to rapidly respond to changes in an operating environment. Co-ordinating rapid changes is particularly difficult.

### SUMMARY

According to a first aspect, there is provided a method comprising: obtaining, at a first uncrewed vehicle (e.g. a decoy device), locally received radar data based, at least in part, on data from one or more sensors of the first uncrewed vehicle; receiving, at the first uncrewed vehicle device, remote information from each of one or neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links (e.g. local, short-range communication links) between said nodes; generating aggregated radar data for the first uncrewed vehicle based on the locally received radar data and the remote information in accordance with a message aggregation scheme; providing information to one or more of said neighbouring uncrewed vehicles for use as remote information by said neighbouring uncrewed vehicles; and taking action at the first uncrewed vehicle based, at least in part, on the aggregated radar data for the first uncrewed vehicle. The radar data may comprise observations or measurements of radar sensor transmissions. The radar data may relate to observations related to adversary radar in a monitored scene provided by on-board sensors. The method may be implemented by one or more of the uncrewed vehicles deploying mechanical or electronic countermeasures to deceive the adversary radar sensor and/or to impair its situation awareness and surveillance capability.

By way of example, radio frequency (RF) sensing may be performed to sense radar operation parameters and other parameters of an adversary device. As discussed below, software defined radio (SDR) may be used for RF sensing. Based on this data, and the decision process, the swarm may deploy radar reflectors or chaff or with electronic counter measures (such as radio frequency jamming technology or spoofing technology) to make it difficult for the enemy adversary device to locate detect specific targets in the scene (such as own assets). The swarm may deploy radar reflectors in order to amplify the radar cross section of the uncrewed vehicles. This could be used by individuals or groups of uncrewed vehicles to mimic the signature of a high value, sought after target.

Depending on the data rate and/or the communication link (e.g. the quality and bandwidth of the link), the information provided from the first uncrewed vehicle to a neighbouring uncrewed vehicle may include one or more of: raw observations collected by the first uncrewed vehicle regarding the target sensor/radar and (optionally) actions at the first uncrewed device; extracted information following processing of raw observations (e.g. estimating radar parameters such as it coverage, location, etc.) and possible own actions; and high-level information on an adversary device (or radar therefore) and/or environment.

The method may further comprise receiving an algorithm for controlling the action taken at said first uncrewed vehicle. The algorithm may be a machine-learning algorithm (such as a multi-agent deep reinforcement learning, MADRL, algorithm), a hard-coded algorithm, or a combination thereof.

The method may further comprise receiving an algorithm for implementing said message aggregation scheme. The algorithm may be a machine-learning algorithm (such as a graph-machine learning algorithm), a hard-coded algorithm, or a combination thereof.

Taking action at said first uncrewed vehicles may include moving the first uncrewed vehicle relative to one or more objects or devices (e.g. adversary devices) identified from said aggregated radar data. Alternatively, or in addition, taking action at the first uncrewed vehicle may comprise deploying one or more electronic counter measures, ECM (e.g. for spoofing/deception purposes).

The first uncrewed vehicle may comprise one or more radar reflectors or chaff. Moreover, taking action at the first uncrewed vehicle may comprise deploying or configuring one or more of said one or more radar reflectors or chaff.

The remote information received from each said one or more neighbouring uncrewed vehicles may comprise aggregated received radar data.

The information provided to said one or more neighbouring uncrewed vehicles may comprise aggregated received radar information.

Some example embodiments comprise adding a further uncrewed vehicle to the plurality of uncrewed vehicles organised as said graph of nodes and edges. Alternatively, or in addition, some example embodiments comprise removing one of said uncrewed vehicles from the plurality of uncrewed vehicles organised as said graph of nodes and edges.

Generating said aggregated radar data for the first uncrewed vehicle may comprises one or more of: determining a maximum and/or a minimum of a plurality of datapoints; generating an average of a plurality of datapoints; generating a weighted average of a plurality of datapoints; determining an average position of a plurality of sensor measurements that identify at least one or one or more objects or devices; and determining an average position of a plurality of sensor measurements that do not identify at least one or one or more objects or devices.

According to a second aspect, there is provided a method comprising: organising a plurality of uncrewed vehicles as a graph of nodes and edges, wherein each uncrewed vehicle of the plurality forms one of the said nodes and said edges represent communication links (e.g. local, short-range communication links) between said nodes; obtaining locally received radar data at one or more of said plurality of uncrewed vehicles from one or more sensors at the respective uncrewed vehicle; locally generating, at one or more of said uncrewed vehicles, aggregated radar data for the respective uncrewed vehicle, in accordance with a message aggregation scheme, based on the locally received radar data obtained at the respective uncrewed vehicle and, at least some of the information communicated between neighbouring uncrewed vehicles; communicating information between neighbouring uncrewed vehicles; and taking action at one or more uncrewed vehicle of the plurality based, at least in part, on the aggregated radar data for the respective uncrewed vehicle.

Taking action at one or more uncrewed vehicles of the plurality may include moving one or more of said uncrewed vehicles relative to one or more objects or devices (e.g. one or more adversary devices) identified from said aggregated radar data. Alternatively, or in addition, taking action at one or more uncrewed vehicles of the plurality may include deploying one or more electronic counter measures, ECM at one or more of said uncrewed vehicles. Alternatively, or in addition, taking action at one or more uncrewed vehicles of the plurality may include deploying or configuring one or more radar reflectors or chaff at one or more of said uncrewed vehicles.

Some example embodiments further comprise providing a first algorithm for taking action (for instance using MADRL) at said uncrewed vehicles to one or more of said nodes. The method may further comprise training said first algorithm for taking said decisions.

Some example embodiments further comprise providing a second algorithm for implementing said message aggregation scheme. The method may further comprise training said second algorithm.

The method may further comprise adding a further uncrewed vehicle to the plurality of uncrewed vehicles organised as said graph of nodes and edges. Alternatively, or in addition, the method may comprise removing one of said uncrewed vehicles from the plurality of uncrewed vehicles organised as said graph of nodes and edges.

In some example embodiments, generating said aggregated radar data for the first uncrewed vehicle comprises one or more of: determining a maximum and/or a minimum of a plurality of datapoints; generating an average of a plurality of datapoints; generating a weighted average of a plurality of datapoints; determining an average position of a plurality of sensor measurements that identify at least one or one or more objects or devices; and determining an average position of a plurality of sensor measurements that do not identify at least one or one or more objects or devices.

The radar data may comprise observations or measurements of radar sensor transmissions.

The remote information received from each said one or more neighbouring uncrewed vehicles may comprise aggregated radar data. Alternatively, or in addition, the information provided to said one or more neighbouring uncrewed vehicles comprises aggregated radar information.

According to a third aspect, there is provided a first uncrewed vehicle (e.g. a decoy device) comprising: one or more sensors for obtaining locally received radar data relating to the first uncrewed vehicle; a communication module for receiving remote information from each of one or more neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links (e.g. local, short-range communication links) between said nodes; a control module for generating aggregated radar data for the first uncrewed vehicle based on the locally received radar data and the received remote information in accordance with a message aggregation scheme; and a processor for determining action to be taken at the first uncrewed vehicle based, at least in part, on the aggregated radar data for the first uncrewed vehicle. The first uncrewed vehicle may further comprise one or more radar reflectors or chaff. The first uncrewed vehicle may be configured to perform (at least) any method as described herein (including the methods of the first and second aspects described above).

The first uncrewed vehicle may be configured to receive an algorithm for controlling the action taken at said first uncrewed vehicle and/or an algorithm for implementing said message aggregation scheme.

Taking action at said first uncrewed vehicles may include moving the first uncrewed vehicle relative to one or more objects or devices (e.g. adversary devices) identified from said aggregated radar data. Alternatively, or in addition, taking action at the first uncrewed vehicle may comprise deploying one or more electronic counter measures, ECM (e.g. for spoofing/deception purposes).

The first uncrewed vehicle may comprise one or more radar reflectors or chaff. Moreover, taking action at the first uncrewed vehicle may comprise deploying or configuring one or more of said one or more radar reflectors or chaff.

The remote information received from each said one or more neighbouring uncrewed vehicles may comprise aggregated received radar data.

The information provided to said one or more neighbouring uncrewed vehicles may comprise aggregated received radar information.

Some example embodiments comprise adding a further uncrewed vehicle to the plurality of uncrewed vehicles organised as said graph of nodes and edges. Alternatively, or in addition, some example embodiments comprise removing one of said uncrewed vehicles from the plurality of uncrewed vehicles organised as said graph of nodes and edges.

Generating said aggregated radar data for the first uncrewed vehicle may comprises one or more of: determining a maximum and/or a minimum of a plurality of datapoints; generating an average of a plurality of datapoints; generating a weighted average of a plurality of datapoints; determining an average position of a plurality of sensor measurements that identify at least one or one or more objects or devices; and determining an average position of a plurality of sensor measurements that do not identify at least one or one or more objects or devices.

According to a fourth aspect, there is provided a system comprising a plurality of first uncrewed vehicles as set out above with respect to the third aspect.

According to a fifth aspect, there is provided computer-readable instructions which, when executed by a computing apparatus, cause the computing apparatus to perform (at least) any method as described herein (including the methods of the first and second aspects described above).

According to a sixth aspect, there is provided a computer-readable medium (such as a non-transitory computer-readable medium) comprising program instructions stored thereon for performing (at least) any method as described herein (including the methods of the first and second aspects described above).

According to a seventh aspect, there is provided an apparatus comprising: at least one processor; and at least one memory including computer program code which, when executed by the at least one processor, causes the apparatus to perform (at least) any method as described herein (including the methods of the first and second aspects described above).

### BRIEF DESCRIPTION OF THE FIGURES

Embodiments of the invention will now be described by way of example only with reference to the figures, in which:
Figure 1 is a block diagram of a system in accordance with an example embodiment;
Figure 2 is a flow chart showing an example operation of the system of Figure 1;
Figure 3 is a block diagram of a system in accordance with an example embodiment;
Figure 4 is a flow chart showing an example operation of the system of Figure 3 in accordance with an example embodiment;
Figures 5 and 6 are block diagrams systems in accordance with example embodiments;
Figure 7 is a flow chart in accordance with an example embodiment;
Figure 8 is a block diagram of a system in accordance with an example embodiment;
Figure 9 is a flow chart showing in accordance with an example embodiment;
Figure 10 is a block diagram of a system model in accordance with an example embodiment;
Figure 11 shows a neural network used in some example embodiments;
Figures 12 and 13 are flow charts in accordance with example embodiments;
Figure 14 is a block diagram of a system in accordance with an example embodiment;
Figures 15 and 16 are flow charts in accordance with example embodiments;
Figure 17 is a block diagram of a system model in accordance with an example embodiment;
Figures 18 and 19 are flow charts in accordance with example embodiments; and
Figure 20 is a block diagram of a system in accordance with an example embodiment.

### DETAILED DESCRIPTION

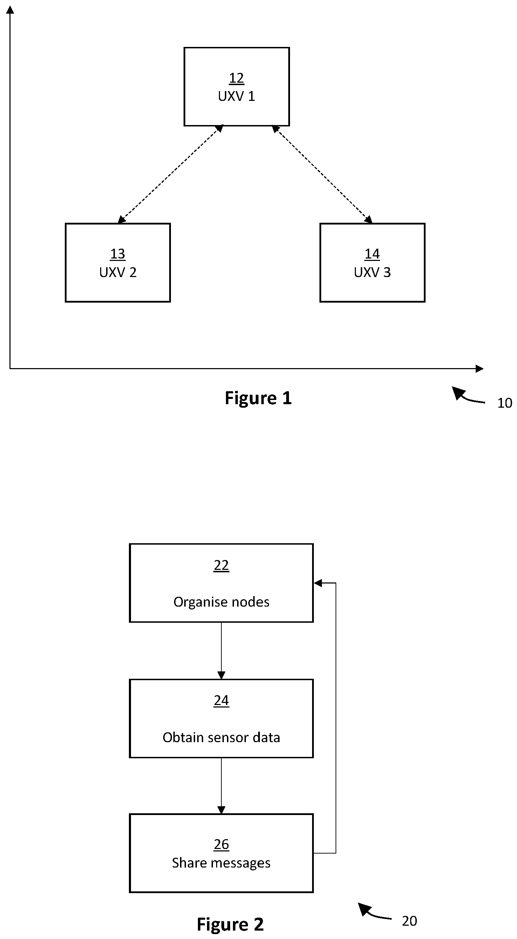

Figure 1 is a block diagram of a system, indicated generally by the reference numeral 10, in accordance with an example embodiment. The system 10 comprises a first uncrewed vehicle 12, a second uncrewed vehicle 13 and a third uncrewed vehicle 14. The uncrewed vehicles 12 to 14 may, for example, include uncrewed aerial vehicles (UAVs), uncrewed ground vehicles (UGVs) or combinations thereof. Other forms of uncrewed vehicles that could be used will be apparent to the skilled person. The various uncrewed vehicles are generally reference herein with the acronym UXV.

The plurality of uncrewed vehicles of the system 10 form a "swarm" of uncrewed vehicles that are organised as a graph of nodes and edges, wherein each uncrewed vehicle of the plurality forms one of the said nodes and said edges represent communication links between said nodes. This is represented schematically in Figure 1 by plotting the positions of the UXVs 12 to 14 relative to an x-axis and a y-axis.

In the example system 10, the first uncrewed vehicle 12 is in two-way communication with both the second uncrewed vehicle 13 and the third uncrewed vehicle 14, but the second and third uncrewed vehicles are not in direct communication; by way of example, a physical barrier or some other impediment may exist between the current positions of the second and third uncrewed vehicles.

The uncrewed vehicles of the system 10 may form part of a swarm of uncrewed vehicles as part of a battlefield deployment. Of course, a real system is likely to include more than the three uncrewed vehicles of the system 10. It should be noted that some multi-domain and data-enabled battlespaces pose challenges for the control of uncrewed vehicles. This can be compounded by sensors, such as radars, increasingly demonstrating the ability to adapt their surveillance strategies to maximise performance, for example enabling an adversary radar to mitigate the impact of deception strategies, including ECMs, and/or to locate and neutralise UXVs.

Figure 2 is a flow chart, indicated generally by the reference numeral 20, showing an example operation of the circuit of Figure 1.

The flow chart 20 starts at step 22, where nodes of a plurality of uncrewed vehicles (such as the UXVs 12, 13 and 14) are organised. The step 22 may include defining a position of each of the uncrewed vehicles within the swarm (e.g. relative to each other).

At step 24, some or all of the uncrewed vehicles obtain sensor data (e.g. received radar data). Such sensors may be used to obtain data relating, for example, to the physical and/or electromagnetic environment in which the respective uncrewed vehicle is operating, data regarding other uncrewed vehicles of the swarm and/or data relating to other devices (e.g. one or more targets). A particular uncrewed vehicle may take one or more actions in response to the sensor data. By way of example, radio frequency (RF) sensing may be performed to sense radar operation parameters and other parameters of an adversary device. As discussed below, software defined radio (SDR) may be used for RF sensing.

At step 26, messages are shared with one or more other uncrewed vehicles of the swarm; said messages may include data, such as at least some of the sensor data obtained in step 24. Sharing messages can enable a particular uncrewed vehicle to take decisions based, at least part, on sensor data obtained from other uncrewed vehicles of the swarm. The messages may include information relating to characteristics of the physical and/or electromagnetic environment that UXVs are operating in and/or information regarding potential threats such as the target adversary radar or sensors. The messages may thereby include sensor data and/or higher-level salient information whose aggregation aids the situational awareness of the swam and/or of members of the swarm.

The flow chart 20 shows how the uncrewed vehicles of the system 10 (and similar systems) can communicate with neighbouring uncrewed vehicles of a swarm to transfer messages about the swarm, including under denied degraded intermittent or limited (DDIL) communication constraints in congested and/or contested electromagnetic environments. For example, even though there is no direct link between the second UXV 13 and the third UXV 14, information can be shared between those UXVs by sharing sensor data (in step 24) via the first UXV 12. This is sometimes referred to as either multi-hop communication or beyond line-of-sight (BLOS) communication.

In this way, the system 10 enables graph-structured communications in which uncrewed vehicles of a swarm can communicate with other uncrewed vehicles in the swarm via messages transmitted (in one or more hops) via neighbouring devices in the swarm. For example, in the context of target detection, information concerning target sightings and movement across the graph-based swarm can be shared between nodes. This can be advantageous, for example, where at least one of the uncrewed vehicles of the swarm obtains noisy and/or partial data regarding the scene and/or where communications between nodes may be intermittent/unreliable.

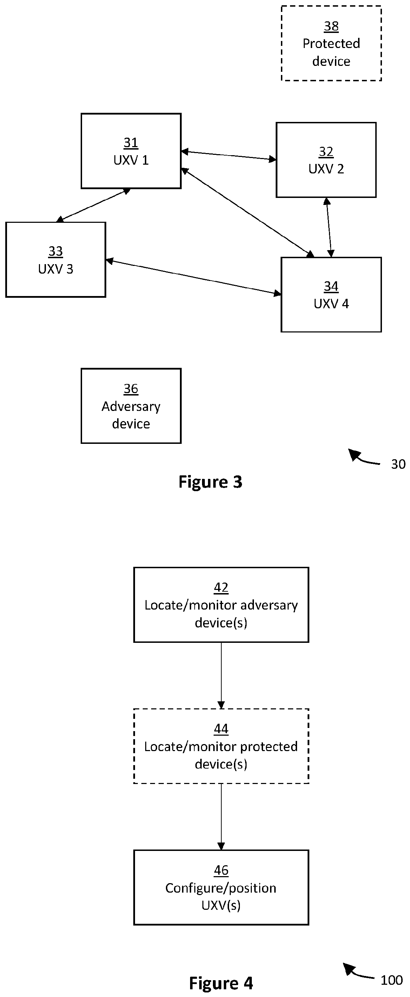

Figure 3 is a block diagram of a system, indicated generally by the reference numeral 30, in accordance with an example embodiment.

The system 30 comprises a first uncrewed vehicle, UXV1, 31, a second uncrewed vehicle, UXV2, 32, a third uncrewed vehicle, UXV3, 33, and a fourth uncrewed vehicle, UXV4, 34, that collectively form a swarm of uncrewed vehicles. As discussed above with reference to the uncrewed vehicles 12 to 14, each of the uncrewed vehicles 31 to 34 may, for example, be an uncrewed aerial vehicle (UAV), an uncrewed ground vehicle (UGV) or some similar uncrewed vehicle (or a combination thereof). The system 30 further comprises an adversary device 36 (which may be one of one or more adversary devices) and may further comprise a protected device 38 (which may be one of one or more protected devices).

As shown in Figure 3, UXV1 is in communication with each of UXV2, UXV3 and UXV4. UXV2 is in communication with UXV1 and UXV4. UXV3 is in communication with UXV1 and UXV4. UXV4 is in communication with UXV1, UXV2 and UXV3.

As discussed further below, the uncrewed vehicles 31 to 34 may be tasked with detecting and monitoring adversaries or threats (such as the adversary device 36) in a monitored environment and/or may be tasked with protecting devices (such as the protected device 38). More specifically, the uncrewed vehicles 31 to 34 may be tasked with countering the adversary device 36, for example by confusing, distracting and/or overwhelming the adversary device or by duping the adversary device into an incorrect decision. For example, the uncrewed vehicles 31 to 34 may seek to confuse radars or other sensors of the adversary device 36 and/or degrade the situational awareness of the adversary device 36 in some way. For example, radar reflectors could be deployed, as discussed further below.

The plurality of uncrewed vehicles 31 to 34 provides a communication framework for the detection and monitoring of adversary devices (such as the adversary device 36) and/or protected devices (such as the protected device 38). The uncrewed vehicles can communicate with neighbouring uncrewed vehicles in the swarm to transfer messages about the swarm, including the presence of the adversary device 36 and/or the protected device 38.

As noted above, individual links between uncrewed vehicles may be unreliable (e.g. the connections may be intermittent), but some communications can generally be expected to take place, even if intermittent and/or of low quality. In-fact, expected unreliability, e.g. in the form of denied degraded intermittent or limited (DDIL) communication, can be part of a training phase for the swarm; suitable training arrangements are discussed in detail below.

Modern multi-domain and data-enabled battlespaces pose challenges to conventional deception approaches, which can struggle to rapidly respond or adjust to changes in the operating environment or to changes in the capabilities of an opponent. This is compounded by sensors (such as radar sensors) that may be provided with cognition, for example using artificial intelligence (AI) and machine learning (ML) techniques to adapt surveillance strategies to maximise performance.

In the context of the system 30, a swarm of uncrewed vehicles comprising the first to fourth uncrewed vehicles 31 to 34 may be engaged in an adversarial game with the adversary device 36 (or one or more similar devices). For example, the swam may be deployed to seek to hide the protected device 38 and/or to distract the adversary device in some way.

Figure 4 is a flow chart, indicated generally by the reference numeral 40, showing an example operation of the system of Figure 3 in accordance with an example embodiment.

The flow chart 40 starts at step 42 where one or more adversary devices (such as the adversary device 36) are located and monitored. Parameters of the respective adversary device(s) may be determined in step 42. At step 44 one or more protected devices (such as the protected device 38) are located and monitored. Of course, the operations 42 and 44 may be carried out simultaneously, or in a different order. Moreover, one or both of those steps may be omitted; in particular, step 44 may be omitted in example embodiments in which there are no protected devices or in which the location and parameters of the protected device is fixed.

At step 46 of the flow chart 40, one or more of the uncrewed devices of the plurality (e.g. the uncrewed devices 31 to 34) are controlled based on the outcome of the previous steps of the flow chart. Such actions may include changing positions of one or more UXVs within a swarm and/or changing a configuration of one or more UXVs of the swarm (e.g. by deploying a countermeasure that seeks to distract or confuse one or more adversary devices, as discussed in detail below).

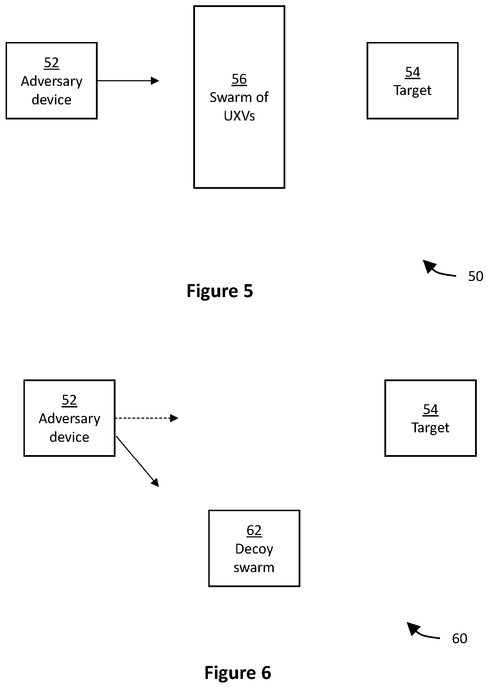

Figure 5 is a block diagram of a system, indicated generally by the reference numeral 50, in accordance with an example embodiment. The system 50 comprises an adversary device 52 (e.g. the adversary device 36), a target 54 of the adversary (e.g. the protected device 38) and a swarm of uncrewed vehicles 56 (e.g. the uncrewed vehicles 31 to 34). The swarm 56 may be provided with radar reflectors or chaff or with electronic counter measures (such as radio frequency jamming technology or spoofing technology) that can be deployed to make it difficult for the adversary device 52 to detect specific targets in the scene (such as the target 54). As used herein, the term chaff refers to providing a large radio cross section (RCS) for a short period of time that can, for example, make a UXV looking more threatening.

Figure 6 is a block diagram of a system in accordance with an example embodiment. The system 60 comprises the adversary device 52 and the target 54 described above and further comprises a swarm of uncrewed vehicles 62 (e.g. the uncrewed vehicles 31 to 34). The swarm 62 is provided as a decoy so that the adversary device is attracted to the decoy swarm 62, rather than to the target 54.

The swarm 56 or the swarm 62 may deploy radar reflectors in order to amplify the radar cross section of the uncrewed vehicles. This could be used by individuals or groups of uncrewed vehicles to mimic the signature of a high value, sought after target. As shown in Figure 6, this may encourage the adversary device 52 to deviate from an original route towards the target 54 (indicated with a dotted arrow) to an updated route towards the decoy swarm 62 (indicated with a solid arrow). The deviation shown in Figure 6 is provided by way of example only. Other forms of deviating enemy resources include the deployment of effectors (e.g. to eliminate targets) and/or other assets (e.g. to inspect the area where enemy is detected) revealing the adversary resources/assets in the area of interest.

In the context of the algorithm 40, the swarm of uncrewed vehicles comprising the first to fourth uncrewed vehicles 31 to 34 (e.g. the swarm 56 or the decoy swarm 62) may be positioned (in step 46) to cause maximum confusion or distraction to the adversary device 36 or to provide a decoy. Alternatively, or in addition, individual uncrewed vehicles of the swarm may be configured, for example, by deploying radar reflectors or electronic counter measures, e.g. to provide a decoy.

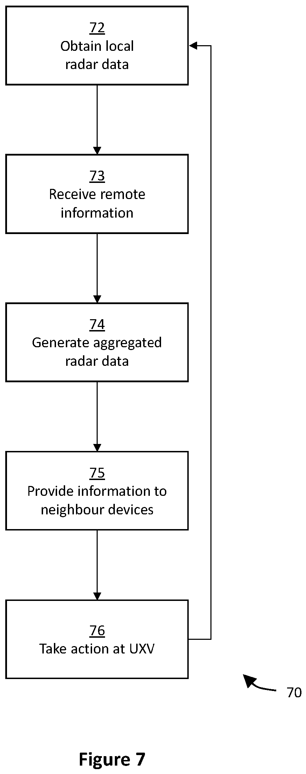

Figure 7 is a flow chart, indicated generally by the reference numeral 70, showing an example operation of the system of Figure 3 in accordance with an example embodiment. The flow chart 70 is described below from the viewpoint of the first uncrewed vehicle, UXV1, 31 of the system 30, but the algorithm shown in the flow chart 70 may be implemented at multiple (e.g. all) uncrewed vehicles of the system 30.

The flow chart 70 starts at step 72, where local radar data (i.e. locally received radar data) is obtained at the first uncrewed vehicle based, at least in part, on data from one or more sensors (e.g. radar sensors) of the first uncrewed vehicle. The data obtained in the step 72 may include data relating to a scene, such as the electromagnetic environment (EME) of the first uncrewed vehicle. The radar data may be obtained using an RF sensor on-board the uncrewed vehicle (e.g. a software defined radio).

Examples of data that might be obtained in step 72 include:
- Presence or position data relating to one or more uncrewed devices of the plurality (e.g. other uncrewed vehicles, UXVs, of a swarm);
- a direction from the first uncrewed vehicle to each of one or more detected objects (e.g. an adversary device 36, a protected device 38 or some other object or device);
- a direction from the first uncrewed vehicle to each of one or more neighbouring uncrewed vehicles and/or one or more detected objects;
- movement data for the first uncrewed vehicle, such as speed, velocity, bearing, or any other spatial-temporal characteristic;
- movement data for one or more other uncrewed vehicles, such as speed, velocity, bearing, or any other spatial-temporal characteristic;
- a monotonically decaying value representing a last sighting of each of one or more detected objects (e.g. adversary devices, protected devices or other objects);
- one or more of an identity, an object type and a status of one or more detected objects;
- a node degree indicating a number of neighbouring uncrewed vehicles in communication with the first uncrewed vehicle;
- information relating to the radar of a device (e.g. an adversary device). Such information might include transmission parameters such as frequency band, pulse repetition frequency, rate of change of peak transmit power; and/or
- information relating to any protected devices (e.g. their location and their future location), if relevant.

At step 73, remote information is received at the first uncrewed vehicle from each of one or more neighbouring uncrewed vehicles. As discussed above, the uncrewed vehicles 31 to 34 form at least part of a plurality of uncrewed vehicles organised as a graph of nodes and edges, wherein each uncrewed vehicle of the plurality forms one of the said nodes and said edges represent communication links between said nodes. The remote information may be received from one or more uncrewed vehicles in direct contact with the first uncrewed vehicle (e.g. one or more of the second, third and fourth uncrewed vehicles of the example system 30) and/or from one or more uncrewed vehicles not in direct contact with the first uncrewed vehicle (via multi-hop communication).

The remote information received from a particular other uncrewed vehicle in step 73 may include one or more of:
- radar data obtained by one or more radar sensors (e.g. RF sensors, such as an on-board software defined radio) of that uncrewed vehicle;
- radar data obtained at that uncrewed vehicle that has been processed in some way (e.g. to reduce data exchange requirements); and
- aggregated radar data originating from multiple uncrewed vehicles (e.g. aggregated radar data or aggregated processed radar data).

At step 74, aggregated data (e.g. aggregated radar data) is generated for the first uncrewed vehicle based on the locally received radar data (obtained in step 72) and the remote information (received in step 73). The aggregation is performed in accordance with a message aggregation scheme. As discussed elsewhere herein, an algorithm (e.g. a trained machine-learning algorithm, a hand-coded algorithm or a hybrid algorithm) may be provided to the respective uncrewed vehicles for performing the aggregation in step 74.

The aggregated data generated in step 74 may include data relating to the uncrewed vehicles of the plurality (including the first uncrewed vehicle). For example, such data may include one or more of:
- a location of the respective uncrewed vehicle;
- movement data (e.g. speed, velocity, bearing or any other spatial-temporal characteristic) relating to the respective uncrewed vehicle;
- a bearing of one or more of objects (e.g. adversary devices and/or protected devices) from the respective uncrewed vehicle; and
- data about a device (e.g. an adversary device) to be deceived. This may involve obtaining radar transmission parameters (such as frequency band, pulse repetition frequency, rate of change of peak transmit power) of the radar that may be used to determine how best to move or act in response to the adversary device (e.g. to deceive that device).

Generating the aggregated data in step 74 may include one or more of:
- determining a maximum and/or a minimum of a plurality of datapoints;
- generating an average of a plurality of datapoints;
- generating a weighted average of a plurality of datapoints;
- determining an average position of a plurality of sensor measurements that identify at least one of one or more objects; and
- determining an average position of a plurality of sensor measurements that do not identify at least one of one or more objects.

It should be noted that both the local observations of step 72 and the remote data of step 73 may include data relating to one or more adversary devices (such as the adversary device 36).

At step 75, information is provided to one or more (e.g. all) neighbouring uncrewed vehicles of the first uncrewed vehicle for use as remote information by the respective uncrewed vehicles (and may be the remote data received, at the other respective nodes, in step 73). The information provided in the step 75 may be aggregated radar data (e.g. the aggregated radar data generated in step 74), but this is not essential for all example embodiments; for example, raw radar data or processed radar data may be provided. The radar data may be measured data from one or more adversary devices.

At step 76, action is taken at the first uncrewed vehicle based, at least in part, on the aggregated radar data for the first uncrewed vehicle (as generated in the step 74). For example, a position or configuration of the first uncrewed vehicle may be changed in some way. In this way, co-ordinated decision-making in a decentralised swarm of uncrewed vehicles is enabled.

Example action taken in step 76 include changing one or more of: a position of the first uncrewed vehicle relative to one or more objects (e.g. one or more adversary devices and/or one or more protected devices) identified from said aggregated data; moving the first uncrewed vehicle within the graph of nodes; a speed of movement of the first uncrewed vehicle; a direction of movement of the first uncrewed vehicle; deploying countermeasures (e.g. reflectors or electronic counter measures). The algorithm for implementing the step 76 may be received at the uncrewed vehicle and, as discussed in detail below, may be a trained algorithm.

At least some of the uncrewed vehicles of a swarm may have independent decision-making capability (thereby enabling distributed decision-making). For example, the swarm can be trained to locate and monitor devices (such as the adversary device 36) using a machine learning approach that combines multi-agent deep reinforcement learning, MADRL (such as Multi Agent Proximal Policy Optimisation, MAPPO) and Graph Machine Learning, GML (e.g. graph neural network, GNN). This enables GML-based communication (between nodes) and MADRL based actuation (at different nodes/ uncrewed vehicles), for example providing uncrewed vehicles in a particular pattern. The MADRL component may consider both local observations (from local sensors - see step 72) and aggregated messages obtained via GML approaches (from other nodes of the graph - see step 73).

Decision-making can take place at uncrewed vehicles (e.g. at step 76 of the flow chart 70) even if communications with some (or all) other nodes is not possible. The distributed nature of aggregation of messages means that messages will tend to get through so that good (and consistent) decisions can be reached at different nodes.

In some example embodiments all nodes (e.g. all uncrewed vehicles of the system 30) have decision-making capabilities, but this is not essential to all example embodiments. For example, some uncrewed vehicle may be provided primarily for obtaining data.

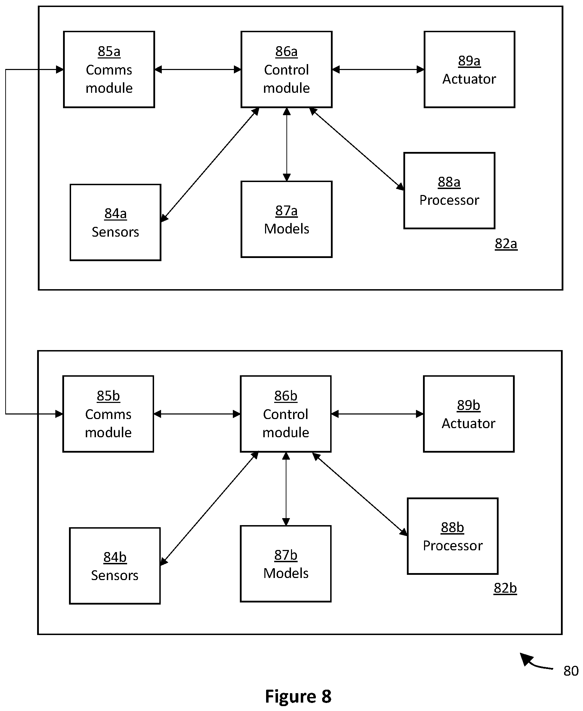

Figure 8 is a block diagram of a system, indicated generally by the reference numeral 80, in accordance with an example embodiment. The system 80 comprises a first uncrewed vehicle 82a and a second uncrewed vehicle 82b. The uncrewed vehicles 82a and 82b may, for example, be two of the uncrewed vehicles of the system 30 or the swarms 56 and 62 described above. Each of the uncrewed vehicles 82a and 82b may be able to implement some or all of the steps of the flow chart 70 described above.

The first uncrewed vehicle 82a comprises one or more sensors 84a (e.g. a radar sensor), a communications module 85a, a control module 86a, one or more models 87a, a processor 88a and an actuator 89a. Similarly, the second uncrewed vehicle 82b comprises one or more sensors 84b (e.g. a radar sensor or SDR), a communications module 85b, a control module 86b, one or more models 87b, a processor 88b and an actuator 89b.

The sensors 84a, 84b can be used for obtaining local radar data (i.e. locally received radar data) relating to the respective uncrewed vehicle, thereby implementing step 72 of the flow chart 70. The sensors 64a, 84b may, for example, be RF sensors (e.g. SDRs).

The communication modules 85a, 85b may be used to receive remote information (e.g. radar data or aggregated radar data) from each of one or more neighbouring uncrewed vehicles and to provide information (such as aggregated radar data) to neighbouring uncrewed vehicles. The communication modules may thereby implement steps 73 and 75 of the flow chart 70.

The control modules 86a, 86b may be used to generate aggregated radar data for the respective uncrewed vehicle based, at least in part, on the local radar data (obtained by the respective sensors 84 - see step 72) and the remote information (obtained by the respective communication module 85 - see step 73). As discussed elsewhere, the aggregated radar data may be generated (by the respective control module) in accordance with a message aggregation scheme. The message aggregation scheme may comprise a model (e.g. an ML model) that may be one of the models 87a, 87b.

The processors 88a, 88b may take one or more decisions based, at least in part, on the aggregated radar data for the first uncrewed vehicle. The decisions may be taken based on a model (e.g. an ML model) that may be one of the models 87a, 87b. Example decisions include changes to the configuration and/or the position of one or more uncrewed vehicle based, at least in part, on the aggregated radar data for the respective uncrewed vehicle, as discussed above. Changing the configuration may include deploying on-board deception capabilities such as exposing reflectors and/or using electronic counter measures.

The actuators 89a, 89b may be used to implement decisions made by the respective processors (thereby implementing step 76 of the flow chart 70). Example actuators include motors, radar reflectors and electronic counter measures.

The communication modules 85a and 85b are connected via communication links. The communication links are typically local, short-range communication links. The communication links may be intermittent and/or unreliable and may change over time (e.g. as the respective uncrewed vehicles move). The communication modules 85a, 85b may be implemented using software defined radio (which may also be used, as sensors 84a, 84b, for collecting data on adversary radars).

It should be noted that the modules of the first uncrewed vehicle 82a and the second uncrewed vehicle 82b are schematic and are provided by way of example only. The modules may differ from those shown in Figure 8 (and the modules of the first and second uncrewed vehicles may differ from each other). For example, the functionality of some modules may be merged (such as at least some of the functionality of the control modules and the processors). Moreover, some functionality may be omitted from one or both of the uncrewed vehicles shown (e.g. the processor 88 may be omitted from some uncrewed vehicles, for example if a particular uncrewed vehicle does not have decision-making capabilities).

It should be noted, of course, that two uncrewed vehicles are shown in Figure 8 for ease of description; example implementations may include many more uncrewed vehicles.

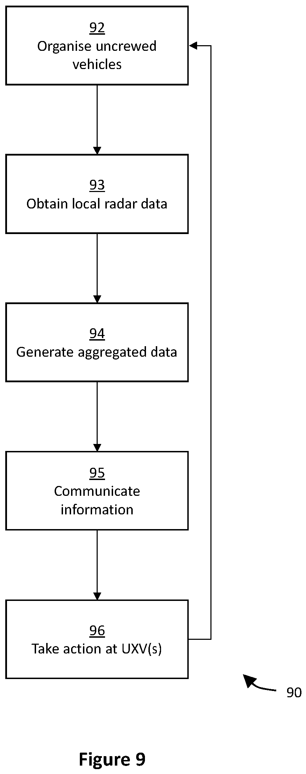

Figure 9 is a flow chart, indicated generally by the reference numeral 90, showing in accordance with an example embodiment.

The flow chart 90 starts at step 92, where a plurality of uncrewed vehicles is organised as a graph of nodes and edges. As discussed in detail above, each uncrewed vehicle of the plurality forms one of the said nodes and said edges represent communication links between said nodes; each of the plurality of uncrewed vehicles has a position within the graph of nodes. By way of example, the step 92 may organise the uncrewed vehicles 31 to 34 of the system 30 described above.

At step 93, local radar data is obtained at one or more (e.g. all) of the plurality of uncrewed vehicles, e.g. from one or more radar sensors, such as SDRs, of the respective uncrewed vehicles. The local radar data (i.e. locally received radar data) may be obtained, for example, by the radar sensors 84a and 84b described above. The radar data may comprise observations or measurements of radar sensor transmissions. Note that some uncrewed vehicles of the plurality may not obtain local radar data (e.g. if said uncrewed vehicle(s) do not have the appropriate sensors).

At step 94, aggregated data (e.g. aggregated received radar data) is generated locally at one or more (e.g. all) of the uncrewed vehicles, in accordance with a message aggregation scheme, based on the local radar data obtained at the respective uncrewed vehicle and, if available, remote information (e.g. aggregated received radar data) communicated between uncrewed vehicles. The message aggregation may be performed in accordance with a received model (e.g. using a model generated as a result of training, such as MADRL training, as discussed herein). The step 94 may, for example, be implemented by the control modules 86a, 86b described above.

The aggregated object information may include one or more of:
- a maximum and/or a minimum of a plurality of datapoints.
- an average of a plurality of datapoints;
- a weighted average of a plurality of datapoints;
- an average position of a plurality of sensor measurements that identify at least one of one or more objects or devices (e.g. adversary device(s) and/or protected device(s)); and
- an average position of a plurality of sensor measurements that do not identify at least one of one or more objects or devices.

At step 95, information is communicated between neighbouring uncrewed vehicles/nodes for use as said remote data (e.g. in an instance of step 94). The information may comprise aggregated sensor data. The step 95 may, for example, be implemented by the communication modules 85a, 85b.

At step 96, actions are taken at one or more of said uncrewed vehicles/nodes based, at least in part, on the aggregated data generated at the respective node. As discussed above, an algorithm (e.g. an ML algorithm) may be provided to one or more of said uncrewed vehicles for taking said decisions. The step 96 may be implemented, for example, by the processors 88a, 88b (and may be executed by the actuators 89a, 89b). As noted above, some uncrewed vehicles of the plurality may omit step 96.

The step 96 may include one or more of:
- changing a position of the first uncrewed vehicle relative to one or more adversary and/or protected device (e.g. moving towards, or away from, an identified device);
- changing a speed of movement of the first uncrewed vehicle;
- changing a direction of movement of the first uncrewed vehicle;
- deploying one or more countermeasures (e.g. jamming);
- deploying one or more radar reflectors and/or ECMs.

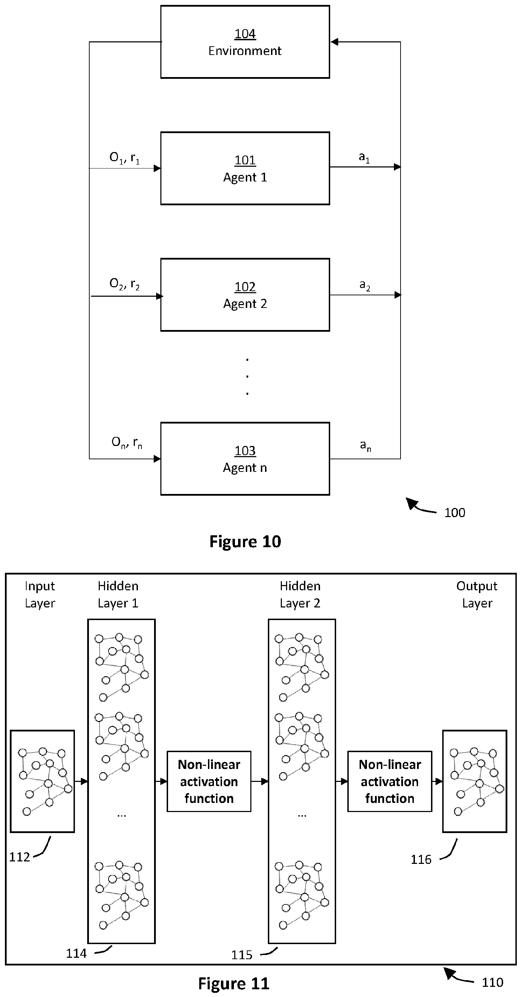

Figure 10 is a block diagram of a system model, indicated generally by the reference numeral 100, in accordance with an example embodiment. The system model 100 may be used to model systems such as the system 30 described above.

The system model 100 comprises a plurality of agents, including a first agent 101, a second agent 102 and an n^{th} agent 103, and also includes an environment 104. Each agent represents one of the uncrewed vehicles described above and the environment 104 represents the environment (including the electromagnetic environment) in which the uncrewed vehicles operate.

Each agent receives an input from the environment 104 and provides an output to the environment. Within the diagram *oᵢ* represents the local observation for each agent i. Upon receiving an observation each agent i takes an action *aᵢ* . During training rewards *rᵢ* can be used to train AI agents using incentive-based learning approaches, e.g., reinforcement learning or genetic algorithms, as discussed further below.

Using the environment, the agents are trained in accordance with machine learning principles to modify the functionality of the system that the system model 100 is modelling. For example, the agents can be trained to maximise rewards when defining what the agents do within the environment 104, including how the agents react to targets. For example, positive rewards can be returned by the training environment for agents detecting an adversary agent, or for preventing the adversary agent from completing its objective. A positive reward might, for example, relate to successfully drawing an adversary UXV away from an asset (e.g. away from a protected device or away from deployed soldiers, hence successfully deceiving the adversary). A negative response (i.e. a penalty) might be returned to the training environment for agents that fail in some way (e.g. if an adversary device reaches a protected device).

The models describing the agents 101 to 103 can be provided to respective uncrewed vehicles and may be stored as the models 87 described above.

By way of example, the agents 101 to 103 may describe trainable message aggregation schemes that can be used to generate the aggregated radar data in step 74 of the algorithm 70 and step 94 of the algorithm 90. Alternatively, or in addition, the agents 101 to 103 may describe decision-making algorithms used in step 76 of the algorithm 70 and step 96 of the algorithm 90.

Figure 11 shows a neural network, indicated generally by the reference numeral 110, used in some example embodiments. For example, the neural network 110 may be used to describe the agents 101 to 103 described above and may be the models 87 of the uncrewed vehicle 82 described above.

The neural network 110 comprises a first layer 112, one or more hidden layers 114, 115, and an output layer 116. Input data (such as sensor data and/or remote information, such as aggregated data) may be provided to the first layer 112. Processed data, such as aggregated sensor data, may be output by the output layer 116.

Parameters of the neural network 110 can be updated in accordance with machine-learning principles to modify the performance of the model (and thereby to modify the performance of the respective agent). For example, as discussed above, the agents can be trained to maximise rewards when defining what the agents do within the environment 114, including how the agents react to one or more detected objects or detected radar signals. Similar neural network structures can be used to describe both decision-making algorithms and message aggregation schemes.

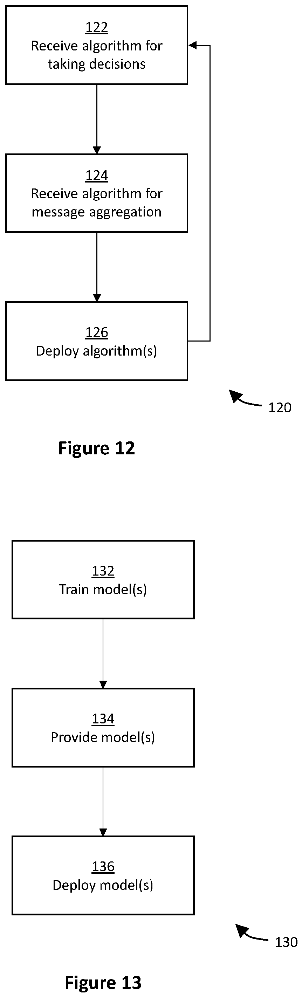

Figure 12 is a flow chart, indicated generally by the reference numeral 120, in accordance with an example embodiment. The flow chart 120 may be implemented at one or more of the uncrewed vehicles described herein.

The flow chart 120 starts at step 122, where the respective uncrewed vehicle/node receives an algorithm (e.g. a machine-learning algorithm) for taking decisions (e.g. for controlling the configuring and/or positioning of the respective uncrewed vehicle and/or for controlling the deployment of radar reflectors, electronic counter measures or the like). The algorithm may be a multi-agent deep reinforcement learning (MADRL) algorithm trained in accordance with the principles outlined above, a hard-coded algorithm or a combination thereof (e.g. a hybrid model).

At step 124, the respective uncrewed vehicle/node receives an algorithm (e.g. a machine-learning algorithm) for implementing a message aggregation scheme. Such a message aggregation scheme may be used to generate aggregated data (e.g. aggregated radar data) as discussed in detail above. The algorithm could be machine-learning based (e.g. where each "hop" described above is a GNN layer, with learnt parameters), rules-based (e.g. using hand-coded algorithms), or a hybrid approach could be used (e.g. here a hop could be either rules-based or machine-learnt).

At step 126, the algorithms received in steps 122 and 124 are deployed at the respective uncrewed vehicle/node.

Figure 13 is a flow chart, indicated generally by the reference numeral 130, showing in accordance with an example embodiment.

The flow chart 130 starts at step 132, where one or more models are trained. The models may relate to the algorithm for controlling decision-making at a respective uncrewed vehicle discussed above and/or to the algorithm for implementing the message aggregation scheme discussed above. The algorithm(s) may be trained using machine learning principles, as discussed above.

At step 134, the model(s) trained in step 132 are provided to one or more uncrewed vehicles. These may be the algorithm received in steps 122 and/or 124 of the flow chart 120 described above.

At step 136, the models are deployed at the respective uncrewed vehicles, thereby implementing step 126 of the flow chart 120.

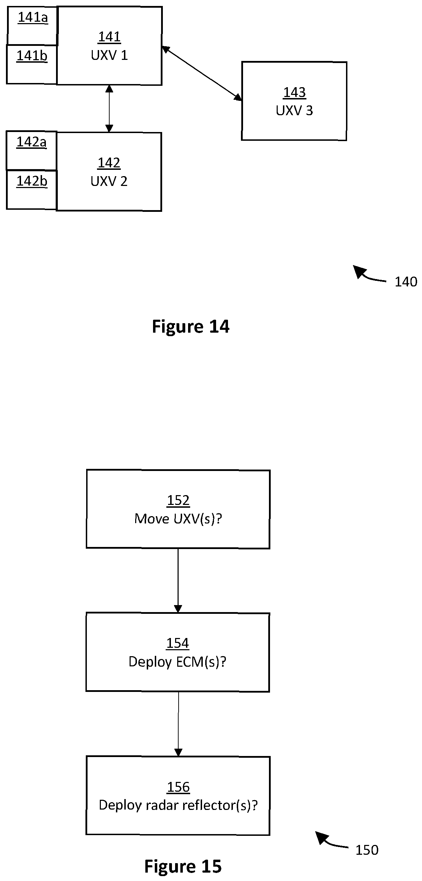

Figure 14 is a block diagram of a system in accordance with an example embodiment. The system 140 comprises a first uncrewed vehicle 141, a second uncrewed vehicle 142 and a third uncrewed vehicle 143. The uncrewed vehicles 141 to 143 may, for example, include uncrewed aerial vehicles (UAVs), uncrewed ground vehicles (UGVs), or combinations thereof, as discussed above. The uncrewed vehicles are arranged in a swarm of uncrewed vehicles that are organised as a graph of nodes and edges in a similar manner to the swarms 10, 30, 56 and 62 described above. In the example swarm 140, the first uncrewed vehicle 141 is in two-way communication with both the second and the third uncrewed vehicles.

The first uncrewed vehicle 141 includes a deployable electronic countermeasure (ECM) 141a, such as a jamming device, and/or a radar reflector 141b. Similarly, the second uncrewed vehicle 142 includes a deployable ECM 142a, such as a jamming device and/or a radar reflector 142b. In this example embodiment, the third uncrewed vehicle 143 does not include a deployable ECM or a radar reflector. Thus, the ECMs and radar reflectors available to an algorithm may be individually (i.e. separately) deployable.

The uncrewed vehicles 141, 142 and 143 may be positioned and configured in accordance with the principles discussed above (for example in an implementation of step 46 of the algorithm 40, step 76 of the flow chart 70, or step 96 of the flow chart 90 described above). For example, one or more of the uncrewed vehicles may be deployed as a decoy device (e.g. a self-propelled decoy) and/or one or more of the uncrewed vehicles may be used as radar reflectors.

Figure 15 is a flow chart, indicated generally by the reference numeral 150, showing in accordance with an example embodiment. The flow chart 150 may be used in an implementation of step 46 of the algorithm 40, step 76 of the flow chart 70, or step 96 of the flow chart 90 described above.

The flow chart 150 starts at step 152, where one or more uncrewed vehicles of a plurality of uncrewed vehicles may be moved. For example, a group of uncrewed vehicles may be moved to act as a decoy. By way of example, one or more uncrewed vehicles may be moved relative one or more adversary devices and/or relative to one or more protected devices.

At step 154, one or more electronic countermeasures (ECMs) may be deployed at one of more of the uncrewed vehicles. Example ECMs including jamming (e.g. using on-board transmitters or digital radio frequency memory, DRFM).

At step 156, one or more radar reflectors may be deployed.

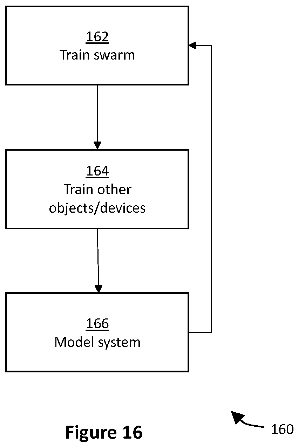

Figure 16 is a flow chart, indicated generally by the reference numeral 160, in accordance with example embodiments. The flow chart 160 may be used to train functionality within a system, such as the system 30 described above.

The flow chart 160 starts at step 162, where a plurality (e.g. a swarm) of uncrewed vehicles is trained. At step 164, an expected functionality of one or more other devices or objects that the swarm is intended to interact with is trained. The step 164 may, for example, anticipate how one or more adversary devices and/or one or more protected devices may react to the trained functionality of the swarm. A system including the uncrewed vehicles trained in step 162 and the one or more devices or objects trained in the step 124 is modelled in step 166. The flow chart then returns to step 162 so that the training of the swarm and other devices/objects can be updated.

Note that the step 164 may be omitted, for example if the functionality of the relevant devices or objects is not adjustable.

The training regime of Figure 16 may be used to iteratively improve strategies for the swarm of uncrewed vehicles (step 162) and strategies for other devices or objects (step 164). Adversarial learning frameworks guided by solution concepts from game theory can result in desirable solution concepts (such as policies that can generalise across different types of adversary). If well designed, such a development-evaluation environment can provide a good representation of real setting in which uncrewed vehicles may be deployed in practice.

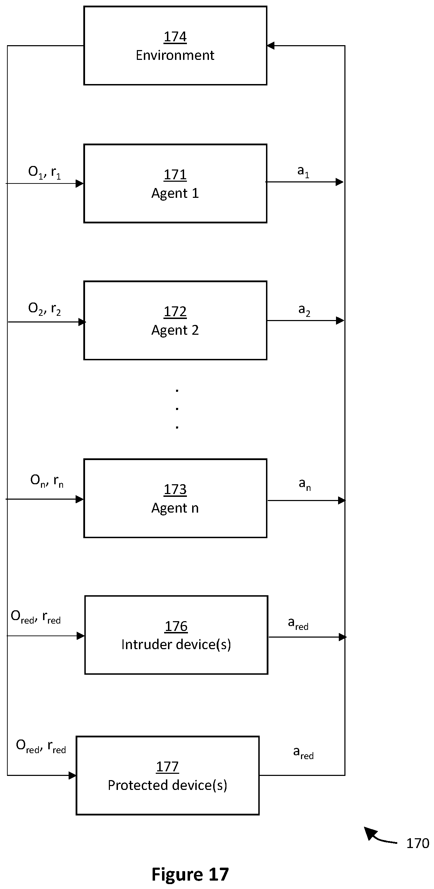

Figure 17 is a block diagram of a system model, indicated generally by the reference numeral 170, in accordance with an example embodiment. The system model 170 may be used in an implementation of the algorithm 160 described above.

The system model 170 comprises a plurality of agents, including a first agent 171, a second agent 172 and an n^{th} agent 173 (which may be similar to the first agent 101, the second agent 102 and the n^{th} agent 103 of the system model 100 described above). The system model 170 includes an environment 174 (similar to the environment 104). One or more adversary devices are modelled schematically by the adversary device(s) 176. Similarly, one or more protected devices are modelled schematically by the protected device(s) 177. Note that the adversary device(s) and/or the protected device(s) may comprise a plurality of models (e.g. modelling different target devices or modelling different protected devices).

Each agent 171-173, the adversary device model 176 and the protected device model 177 receives an input from the environment 174 and provides an output to the environment. At least some of the agents and device model(s) are trained in accordance with machine learning principles to adjust the functionality of the system that the system model 170 is modelling (thereby implementing steps 162 and 164 of the algorithm 160). The environment 174 can also be used for training, as discussed above.

As discussed above, the agents can be trained to maximise rewards when defining what the agents do within the environment 174, including how the agents react to one or more targets. Similarly, the targets can be trained to maximise rewards when defining what the targets might do within the environment 174. For example, the agents 171 to 173 may receive a positive reward in the event that an intruder device is drawn away from a target and an intruder device 176 may receive a positive reward in the event that the intruder device reaches a target.

The models describing the agents 171 to 173 can be provided to respective uncrewed vehicles and may, for example, be stored as the models 87 described above.

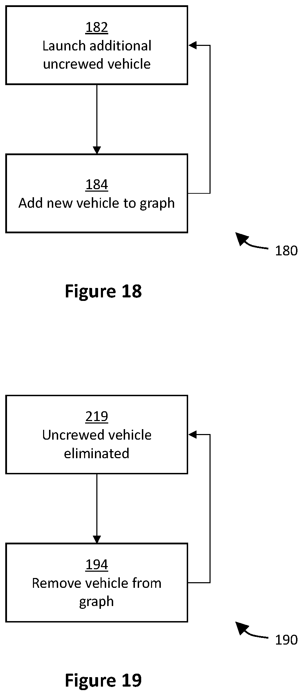

Figure 18 is a flow chart, indicated generally by the reference numeral 180, in accordance with an example embodiment. The flow chart 180 starts at step 182 where an additional uncrewed vehicle is launched (e.g. by a solider). At step 184, the additional uncrewed vehicle is added to a graph of nodes and edges of an existing plurality of uncrewed vehicles. In this way, one or more additional uncrewed vehicles can be added to an existing swarm of uncrewed vehicles. This may add existing functionality to an existing swarm.

Figure 19 is a flow chart, indicated generally by the reference numeral 190, in accordance with an example embodiment. The flow chart 190 starts at step 192 where an uncrewed vehicle is eliminated. At step 194, the eliminated uncrewed vehicle is removed from a graph of nodes and edges of an existing plurality of uncrewed vehicles. By way of example, an existing uncrewed vehicle of a swarm may be lost due to damage or destroyed by enemy action or in some other way.

The flow charts 180 and 190 demonstrate the ad-hoc nature of groups/swarms of uncrewed vehicles in some example embodiments.

Advantages of at least some of the embodiments described herein include the provision of:
- Adaptable swarms of uncrewed vehicles that can respond to changes in a scene and to changes in an electromagnetic environment.
- Scalable and modular systems in which the size of a swarm can be changed.
- Low-cost solutions by providing relatively low-cost uncrewed vehicles.
- Resilient systems that can adapt to the loss of one or more uncrewed vehicles and/or to the loss of one or more communication links.
- Versatile solutions that can, for example, transition between different terrains by deploying suitable uncrewed vehicle types (e.g. uncrewed aerial vehicles, uncrewed ground vehicles, uncrewed underwater vehicles etc.).
- Autonomous devices allowing on-edge implementation (i.e. at individual uncrewed vehicles).
- Locally deployed algorithms that seek to provide high performance, even in congested and contested operational theatres.
- Reduced risk of revealing location of operators or control sensors due to the distributed communications and control.
- Ad-hoc swarms that can setup and increased or decreased in size.
- Decoys and/or reflectors (or similar technology) can be used to "show the false" or "hide the real" in order to seek to prevent an adversary/enemy device from accessing/finding a protected device or some other intended target.

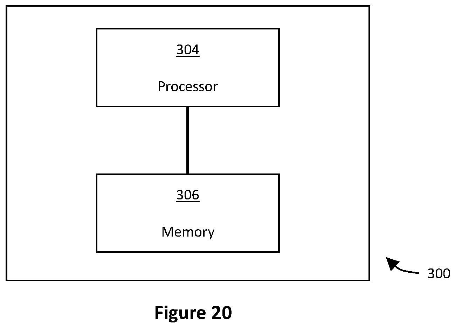

Figure 20 shows a system 300 (comprising a memory 306 and processor 304) that can be used in implementations of example embodiments described herein. The processor 304 (e.g. a CPU) may store a computer program for implementing aspects of one or more of the algorithms described herein (such as the flow charts 20, 40, 70, 90, 120, 130, 150, 160, 180 or 190 described above). In practice, the processor 304 is likely to be a digital signal processor (DSP) including processing blocks such as multipliers, adder/subtractors, and storage registers. The processing may be performed in parallel using pipelines and local registers to enable a high processing rate and data throughput.

Embodiments of the components described herein can be implemented using any suitable software, hardware or firmware applications, programming language, data editors, etc., and may be represented/stored/processed using any suitable data structures, and so on.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method comprising:
obtaining, at a first uncrewed vehicle, locally received radar data based, at least in part, on data from one or more sensors of the first uncrewed vehicle;
receiving, at the first uncrewed vehicle device, remote information from each of one or neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes;
generating aggregated radar data for the first uncrewed vehicle based on the locally received radar data and the remote information in accordance with a message aggregation scheme;
providing information to one or more of said neighbouring uncrewed vehicles for use as remote information by said neighbouring uncrewed vehicles; and
taking action at the first uncrewed vehicle based, at least in part, on the aggregated radar data for the first uncrewed vehicle.

2. The method of claim 1, further comprising:
receiving an algorithm for controlling the action taken at said first uncrewed vehicle; and/or
receiving an algorithm for implementing said message aggregation scheme.

3. The method of claim 1 or claim 2, wherein:
taking action at said first uncrewed vehicles includes moving the first uncrewed vehicle relative to one or more objects or devices identified from said aggregated radar data; and/or
taking action at the first uncrewed vehicle comprises deploying one or more electronic counter measures, ECM.

4. The method of any one of the preceding claims, wherein the first uncrewed vehicle is a decoy device.

5. The method of any one of the preceding claims, wherein the first uncrewed vehicle comprises one or more radar reflectors and wherein taking action at the first uncrewed vehicle optionally comprises deploying or configuring one or more of said one or more radar reflectors.

6. The method of any one of the preceding claims, wherein the remote information received from each said one or more neighbouring uncrewed vehicles comprises aggregated radar data and/or the information provided to said one or more neighbouring uncrewed vehicles comprises aggregated radar information.

7. A method comprising:
organising a plurality of uncrewed vehicles as a graph of nodes and edges, wherein each uncrewed vehicle of the plurality forms one of the said nodes and said edges represent communication links between said nodes;
obtaining locally received radar data at one or more of said plurality of uncrewed vehicles from one or more sensors at the respective uncrewed vehicle;
locally generating, at one or more of said uncrewed vehicles, aggregated radar data for the respective uncrewed vehicle, in accordance with a message aggregation scheme, based on the locally received radar data obtained at the respective uncrewed vehicle and, at least some of the information communicated between neighbouring uncrewed vehicles;
communicating information between neighbouring uncrewed vehicles; and
taking action at one or more uncrewed vehicle of the plurality based, at least in part, on the aggregated radar data for the respective uncrewed vehicle.

8. The method of claim 7, wherein taking action at one or more uncrewed vehicles of the plurality includes one or more of:
moving one or more of said uncrewed vehicles relative to one or more objects or devices identified from said aggregated radar data;
deploying one or more electronic counter measures, ECM at one or more of said uncrewed vehicles;
deploying or configuring one or more mechanical counter measures such as radar reflectors or chaff at one or more of said uncrewed vehicles.

9. The method of claim 7 or claim 8, further comprising:
providing a first algorithm for taking action at said uncrewed vehicles to one or more of said nodes, wherein the method optionally further comprises training said first algorithm for taking said decisions.

10. The method of any one of claims 7 to 9, further comprising:
providing a second algorithm for implementing said message aggregation scheme, wherein the method optionally further comprises training said second algorithm.

11. The method of any one of the preceding claims, further comprising:
adding a further uncrewed vehicle to the plurality of uncrewed vehicles organised as said graph of nodes and edges; and/or
removing one of said uncrewed vehicles from the plurality of uncrewed vehicles organised as said graph of nodes and edges.

12. The method of any one of the preceding claims, wherein generating said aggregated radar data for the first uncrewed vehicle comprises one or more of:
determining a maximum and/or a minimum of a plurality of datapoints;
generating an average of a plurality of datapoints;
generating a weighted average of a plurality of datapoints;
determining an average position of a plurality of sensor measurements that identify at least one or one or more objects or devices; and
determining an average position of a plurality of sensor measurements that do not identify at least one or one or more objects or devices.

13. The method of any one of the preceding claims, wherein said communication links are local, short-range communication links and/or said radar data comprises observations or measurements of radar sensor transmissions.

14. The method of any one of the preceding claims, wherein the remote information received from each said one or more neighbouring uncrewed vehicles comprises aggregated radar data and/or the information provided to said one or more neighbouring uncrewed vehicles comprises aggregated radar information.

15. A first uncrewed vehicle comprising:
one or more sensors for obtaining locally received radar data relating to the first uncrewed vehicle;
a communication module for receiving remote information from each of one or more neighbouring uncrewed vehicles, wherein the first uncrewed vehicle and the one or more neighbouring uncrewed vehicles form at least a part of a plurality of uncrewed vehicles organised as a graph of nodes and edges, wherein each uncrewed vehicle of the plurality forms one of the said nodes and said edges represent communication links between said nodes;
a control module for generating aggregated radar data for the first uncrewed vehicle based on the locally received radar data and the received remote information in accordance with a message aggregation scheme; and
a processor for determining action to be taken at the first uncrewed vehicle based, at least in part, on the aggregated radar data for the first uncrewed vehicle.
